# EUROPÄISCHE PATENTSCHRIFT

(11) **EP 2 156 055 B1**
(45) Veröffentlichungstag und Bekanntmachung des Hinweises auf die Patenterteilung: **30.08.2017**
(21) Anmeldenummer: 08717651.7
(22) Anmeldetag: 12.03.2008
(51) Int. Cl.: F04C 2/10, F04C 11/00, F04C 15/00

(54) **PUMPENBAUGRUPPE ZUR SYNCHRONEN DRUCKBEAUFSCHLAGUNG VON ZWEI FLUIDSÄULEN**
PUMP ASSEMBLY FOR SYNCHRONOUS PRESSURIZATION OF TWO FLUID COLUMNS
GROUPE DE POMPAGE PERMETTANT L'APPLICATION DE PRESSION SYNCHRONE À DEUX COLONNES DE FLUIDE

(30) Priorität: 11.05.2007 DE 102007022215
(43) Veröffentlichungstag der Anmeldung: 24.02.2010
(73) Patentinhaber: Robert Bosch GmbH, 70442 Stuttgart (DE)
(72) Erfinder: SCHEPP, Rene, 71336 Waiblingen (DE); ALAZE, Norbert, 71706 Markgroeningen (DE)
(86) Internationale Anmeldenummer: PCT/EP2008/052905
(87) Internationale Veröffentlichungsnummer: WO 2008/138656

(56) Entgegenhaltungen:
- EP-A- 0 474 001
- DE-A1- 10 023 010
- DE-A1- 10 053 991
- FR-A- 2 497 880
- US-A1- 2003 026 722

## Beschreibung

### Stand der Technik

Die Erfindung geht aus von einer Pumpenbaugruppe zur synchronen Druckbeaufschlagung von zwei Fluidsäulen nach der Gattung des unabhängigen Patentanspruchs 1.

Aus der DE 100 23 010 A1 ist eine innenachsige Drehkolbenmaschine mit zwei oder mehr Innenläufern und einem Außenläufer mit Arbeitsabschnitten entsprechend der Zahl der Innenläufer und einer am Gestell festen Sichel bekannt. Je zwei Innenläufer und die dazugehörigen Arbeitsabschnitte und Sichelabschnitte sind durch eine an der Sichel und damit am Gestell feste Zwischenwand und ein am Außenläufer festes Trennstück voneinander getrennt. Die Innenläufer sind über eine durch die Zwischenwand geführte Welle drehfest miteinander verbunden. Die Arbeitsschnitte des Außenläufers sind ebenfalls drehfest miteinander verbunden. Damit können mehrere Maschinenabschnitte für mehrstufige Verdichtung oder Entspannung oder für Verdichtung oder zum pulsationsarmen Betrieb sehr kompakt angeordnet werden. Derartige Maschinen können als ölfreie, mehrstufige Verdichter bei Brennstoffzellen oder Klimaanlagen verwendet werden.

Eine herkömmliche Pumpenbaugruppe zur synchronen Druckbeaufschlagung von zwei Fluidsäulen ist z. B. aus der DE 100 53 991 A1 als sogenannter Pumpeneinschub für eine hydraulische, radschlupfgeregelte Fahrzeugbremsanlage bekannt, wobei von den beiden Innenzahnradpumpen des Pumpeneinschubs unterschiedliche Bremskreise des Bremssystems mit diagonaler Bremskreisaufteilung beaufschlagt bzw. versorgt werden. Die beiden Innenzahnradpumpen sind durch eine Zwischenwand des mehrteiligen Gehäuses voneinander getrennt und werden quer von einer gemeinsamen Antriebswelle durchsetzt. Auf diese Antriebswelle sind die Ritzel der beiden Zahnradpumpen aufgeschoben und über eine Mitnehmerverbindung drehfest mit ihr verbunden. Um die Pumpenräume der benachbarten Zahnradpumpen gegeneinander abzudichten, sind in angepasste Ringräume der Zwischenwandbohrung im Abstand voneinander zwei Wellendichtringe eingesetzt. Ein dritter Wellendichtring ist in einen Ringraum einer Lagerbohrung im Wellendurchgang aus dem Gehäuse des Pumpeneinschubs heraus eingesetzt. Die Baulänge bzw. Einstecklänge der Pumpenbaugruppe wird somit von der Breite der beiden Innenzahnradpumpen sowie den hinzukommenden Längen der drei von Dichtungsanforderungen beeinflussten Lagerstellen der Antriebswelle bestimmt.

### Offenbarung der Erfindung

Die erfindungsgemäße Pumpenbaugruppe mit den Merkmalen des unabhängigen Patentanspruchs 1 hat demgegenüber den Vorteil, dass zwischen den Innenzahnradpumpen keine Gehäusewand liegt, da die beiden Ritzel der Innenzahnradpumpen in einem von zwei Zahnringen eines gemeinsamen Hohlrades kämmen, das die Trennwand zwischen den Pumpenräumen der beiden Innenzahnradpumpen bildet. Folglich besteht die Trennwand aus einer parallelflachen Rundscheibe des Hohlrades, deren Dicke deutlich geringer sein kann als die einer Gehäusetrennwand mit abgedichtetem Wellendurchgang. Die Baugruppe kann somit wesentlich kompakter gestaltet werden. Außerdem können zwei insbesondere bei Hochdruckpumpen teure Wellendichtringe eingespart werden. Infolge des Wegfalls eines oder mehrerer Wellendichtringe kann sich zudem der Wirkungsgrad der Pumpenbaugruppe erheblich verbessern, da Wellendichtringe dem auftretenden Druckniveau entsprechend ausgelegt sein müssen. In Bremssystemen kann selbst im Saugbereich der Pumpen bei einigen ESP-Anwendungen ein beträchtliches Druckniveau von bis zu 140 bar auftreten, so dass die Wellendichtringe zur Erfüllung ihrer Funktion große Radialkräfte aufbringen müssen, was zu entsprechend großen Reibungskräften zwischen Dichtring und Welle führt.

Durch die in den abhängigen Ansprüchen aufgeführten Maßnahmen und Weiterbildungen sind vorteilhafte Verbesserungen der im unabhängigen Patentanspruch 1 angegebenen Pumpenbaugruppe möglich.

Besonders vorteilhaft ist das die Trennwand bildende Hohlrad an einer zylindrischen Außenumfangsfläche über ein Gleitlager im Gehäuse gelagert, da Lagerschalen von Gleitlagern nur eine geringe Dicke aufweisen und sich somit auch radial eine sehr kompakte Bauweise der Pumpenbaugruppe realisieren lässt. Besteht das Gehäuse aus einem geeigneten Lagerwerkstoff, so kann der Außenumfang des Hohlrades ggf. auch unmittelbar auf dem gegenüberliegenden Innenumfang der Gehäusewand gleitend gelagert sein, wodurch sich eine noch kompaktere Gestaltung ergibt.

Das Hohlrad kann eine besonders einfache Querschnittsgeometrie mit T-Profil aufweisen, wenn die beiden Zahnringe des Hohlrades die gleiche Zähnezahl aufweisen. Die konstruktive Auslegung der Verzahnungen wird dabei erleichtert, wenn auch die in den Zahnringen kämmenden Ritzel der beiden Pumpen mit übereinstimmender Zähnezahl versehen sind. Zu einer günstigen konstruktiven Auslegungsmöglichkeit trägt auch bei, wenn die beiden Ritzel unter im Wesentlichen diametrischer Anordnung in den zugeordneten Zahnring des gemeinsamen Hohlrades eingreifen. Dadurch sind die resultierenden Kräfte, die sich aus der Druckverteilung innerhalb der Pumpenräume auf den Außenring ergeben, gegeneinander gerichtet und heben einander, abgesehen von den durch die Kräfte entstehenden Momenten, die sich aus dem axialen Versatz der Pumpen ergeben, weitgehend auf.

Damit das Hohlrad einteilig mit den Zahnringen ausgebildet oder zumindest drehunbeweglich mit diesen verbunden sein kann, ist nur eines der beiden Ritzel über eine Mitnehmerverbindung drehfest mit der Antriebswelle der Pumpenbaugruppe verbunden.

Um bei der Pumpenbaugruppe zur Abdichtung nur einen Wellendichtring verwenden zu müssen, kann konstruktiv ein einziger, mittels Wellendichtring abzudichtender Wellendurchgang vorgesehen werden.

Die Lagerstelle für das mittelbar über Verzahnungseingriff mit der Antriebswelle drehgekoppelte Ritzel ist vorzugsweise ein Lagerzapfen, dessen Achsstummel in den Pumpenraum hineinragt. Der Lagerzapfen kann dabei in ein Sackloch des Gehäuses eingepresst sein, wodurch ohnehin eine gehäuseseitige Abdichtung gegeben ist. Hat das von der Baugruppe geförderte Fluid ausreichende Schmierstoffeigenschaften, wie z. B. Hydraulikflüssigkeit von Bremssystemen, kann das Ritzel problemlos auf dem Achsstummel des Lagerzapfens gleitend drehgelagert sein.

Eine vorteilhafte, nachfolgend beschriebene Ausführungsform der Erfindung ist in den Zeichnungen dargestellt.

Kurze Beschreibung der Zeichnungen
Fig. 1 zeigt einen schematischen Mittellängsschnitt durch eine erfindungsgemäße Pumpenbaugruppe.
Fig. 2 zeigt eine schematische Schnittdarstellung eines Pumpenraums der erfindungsgemäßen Pumpenbaugruppe.

### Ausführungsform der Erfindung

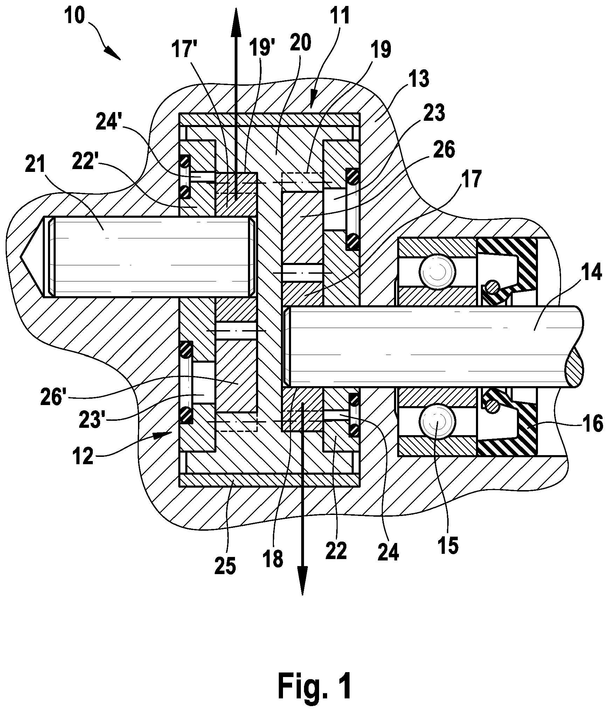

Wie aus Fig. 1 ersichtlich ist, umfasst eine Pumpenbaugruppe 10 zwei Innenzahnradpumpen 11 und 12, die seitlich unmittelbar nebeneinander liegen und in einem gemeinsamen Gehäuse 13 angeordnet sind. Im Einbauzustand ist die Pumpenbaugruppe 10 Bestandteil eines nicht gezeigten Drucksteuergerätes für eine Fahrzeugbremsanlage mit diagonal aufgeteilten Bremskreisen, wobei die Innenzahnradpumpen 11 und 12 jeweils für die Druckversorgung eines der Bremskreise im Zuge von als solches bekannten Bremseingriffen für ABS- oder ESP-Anwendungen zuständig sind. Das gemeinsame Gehäuse 13 ist in nicht gezeigter Weise zweiteilig ausgebildet und unter wechselseitiger Abdichtung der korrespondierenden Flansche gefügt. Der gezeigte Schnittverlauf liegt nicht in einer Ebene, sondern ist insgesamt so gewählt, dass für die Erfindung wesentliche Komponenten der Pumpenbaugruppe 10 in der Schnittdarstellung zu sehen sind.

Der Antrieb der beiden Innenzahnradpumpen 11 und 12 erfolgt extern über eine Antriebswelle 14, die von einem nicht gezeigten Antriebsmotor drehangetrieben wird, so dass die Antriebswelle 14 über einen abzudichtenden Wellendurchgang in das Gehäuse 13 hineingeführt ist. Im Wellendurchgang des Gehäuses 13 sind unmittelbar hintereinander ein Rillenkugellager 15 und ein Wellendichtring 16 angeordnet, wobei das Rillenkugellager 15 ggf. gleichzeitig das Antriebslager des Antriebsmotors sein kann.

Im Gehäuse 13 steht aus dem Wellendurchgang ein Wellenende der Antriebswelle 14 heraus und durchsetzt den Pumpenraum der Zahnradpumpe 11 nahezu vollständig in dessen Querrichtung. Hierbei durchdringt das Wellenende eine Passbohrung eines Ritzels 17, und ist durch eine Mitnehmerverbindung 18, z. B. durch Aufschrumpfen, drehfest mit dem Ritzel 17 verbunden. Die Außenverzahnung des Ritzels 17 kämmt in der Gegenverzahnung eines Zahnrings 19, der zu einem Hohlrad 20 gehört und einteilig mit diesem ausgebildet ist. Das Hohlrad 20 begrenzt den Pumpenraum der Innenzahnradpumpe 11 auf der antriebsabgewandten Seite mit einem planen, geschlossenen Mittelsteg, der gleichzeitig eine Trennwand zum Pumpenraum der Innenzahnradpumpe 12 bildet.

Im Pumpenraum der Innenzahnradpumpe 12 ist ein Ritzel 17' angeordnet, das baugleich zum Ritzel 17 ist und in einem Zahnring 19' des Hohlrades 20 kämmt. Die Mittelbohrung des Ritzels 17' ist vom Achsstummel eines Lagerzapfens 21 durchsetzt, der in eine Sacklochbohrung des Gehäuses 13 eingepresst und somit drehsicher gehalten ist. Der Achsstummel bildet eine Gleitlagerstelle, auf der das Ritzel 17' drehbar gelagert ist. Dabei endet der Lagerzapfen 21 in einem minimalen Abstand zur dem Pumpenraum zugewandten Seite des parallelflachen Mittelstegs des Hohlrades 20. Auf der dem Mittelsteg des Hohlrades 20 gegenüberliegenden Breitseite des Pumpenraumes wird dieser jeweils von einer Druckplatte 22 bzw. 22' geschlossen. Diese Druckplatten 22 und 22' dienen dem Zweck, eine Kompensation des druckabhängig variierenden axialen Dichtspalts vorzunehmen. Da solche Druckplatten z. B. aus der DE 196 13 833 A1 bekannt sind, wird auf weitergehende Erläuterungen zur technischen Funktion verzichtet. In diese Druckplatten 22 und 22' sind jeweils zwei Anschlussöffnungen 23 und 24 bzw. 23' und 24' für Anschlussleitungen des hydraulischen Bremssystems integriert, wobei mit 23 und 23' die Anschlussöffnungen für ihre Saugleitung und mit 24 und 24' die kleineren Anschlussöffnungen für ihre Druckleitung bezeichnet sind.

Zur Abdichtung der Pumpenräume am Außenumfang der Innenzahnradpumpen 11 bzw. 12 liegen die Druckplatten 22 bzw. 22' über einen Teil ihrer Umfangsdicke sowie einen angrenzenden Randstreifen ihrer Breitseite an Gegenflächen des Hohlrades 20 an, wozu das bezogen auf die Drehmittelebene spiegelsymmetrische Hohlrad 20 außenseitig neben dem Zahnring 19 bzw. 19' einen stufigen Absatz aufweist. Das Hohlrad 20 weist somit einen rotationssymmetrischen Grundquerschnitt mit T-Form auf, wobei dessen seitliche Querschenkel jeweils in ihrem Endbereich auf der Innenumfangsseite durch eine Ringnut mit lichtem Rechteckquerschnitt verjüngt sind. Das Hohlrad 20 selbst ist somit axial zwischen Druckplatten 22 und 22' abgestützt. Radial ist das Hohlrad 20 ggf. unter Zwischenlage eines Gleitlagerrings 25 in einem angepassten Ringraum des Gehäuses 13 drehbar gleitend gelagert.

Aufgrund des beschriebenen Aufbaus der Pumpenbaugruppe 10 ergibt sich kinematisch infolge der Mitnehmerverbindung 18 durch Drehen der Antriebswelle 14 eine entsprechende Drehung des Ritzels 17. Da das Ritzel 17 in die korrespondierende Verzahnung des Zahnrings 19 eingreift, wird das Hohlrad 20 entsprechend dem Übersetzungsverhältnis gemäß den Zähnezahlen von Ritzel 17 und Zahnring 19 ebenfalls entsprechend drehangetrieben. Diese Drehbewegung wird durch den Verzahnungseingriff von Zahnring 19' in die Verzahnung von Ritzel 17' weitergegeben. Da die Zähnezahl der beiden Ritzel 17 und 17' übereinstimmt und auch die beiden Zahnringe 19 und 19' über die gleiche Zähnezahl verfügen, drehen sich beide Ritzel 17 und 17' mit gleicher Drehzahl, wie dies bei Pumpenbaugruppen gewünscht wird, deren Pumpen möglichst synchron arbeiten sollen.

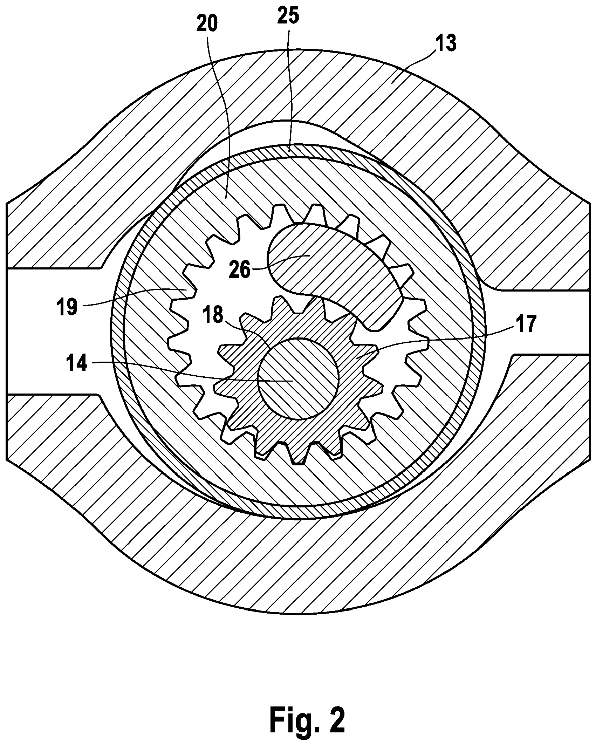

Wie in Verbindung mit Fig. 2 deutlich zu erkennen ist, befindet sich aufgrund der exzentrischen Anordnung des Ritzels 17 bzw. 17' gegenüber dem Hohlrad 20 zwischen deren Umfang jeweils ein etwa sichelförmiger Pumpenraum, der im betriebsbereiten Zustand des Bremssystems vollständig mit Bremsflüssigkeit gefüllt ist. Im Pumpenraum der Innenzahnradpumpen 11 und 12 liegt zudem jeweils eine Ausgleichsniere 26 bzw. 26', die als Füllstück dient und eine Kompensation der radialen Dichtspaltänderungen infolge von Druckunterschieden ermöglicht. Auch dieser Kompensationsmechanismus ist als solches aus dem Stand der Technik bekannt und daher nicht näher beschrieben.

Da die Bremsflüssigkeit durch Drehen von Ritzel 17 und gleichsinniges Drehen des Zahnrings 19 unter Unterstützung der Füllung durch die Ausgleichsniere 26 von der Saugseite zur Druckseite gefördert bzw. gedrückt wird, ergibt sich innerhalb der Innenzahnradpumpen 11 bzw. 12 eine sehr unterschiedliche Kräfteverteilung. So wirkt die Resultierende der Druckkräfte auf der Druckseite der Innenzahnradpumpe 11 bzw. 12 in Radialrichtung, wie in Fig. 1 durch dicke Pfeile angedeutet ist. Damit sich diese Radialkräfte weitgehend aufheben können, greifen die beiden Ritzel 17 und 17' auf entgegengesetzten Umfangsseiten in ihren Zahnring 19 bzw. 19' ein. Die Innenzahnradpumpen 11 und 12 sind somit entgegengesetzt exzentrisch angeordnet, wie auch am radialen Versatz von Antriebswelle 14 und Lagerzapfen 21 zu erkennen ist. Dadurch sind auch die Druckplatten 22 und 22' mit ihren Anschlussöffnungen 23 und 24 bzw. 23' und 24' um 180 Grad gedreht angeordnet.

Da die durch Pfeile angedeuteten Resultierenden der Druckkräfte in den Innenzahnradpumpen 11 und 12 nahezu entgegengesetzt gleich groß sind, müssen im wesentlichen nur noch die durch den axialen Versatz der Resultierenden wirkenden Momente bei der Dimensionierung der Pumpenbaugruppe 10 konstruktiv berücksichtigt werden.

## Patentansprüche

1. Pumpenbaugruppe zur synchronen Druckbeaufschlagung von zwei Fluidsäulen, die zwei zusammen in einem Gehäuse angeordnete, über eine gemeinsame Antriebswelle angetriebene Innenzahnradpumpen umfasst, deren Ritzel im zugehörigen Pumpenraum liegen und im Verzahnungseingriff mit ihrem Hohlrad stehen, **dadurch gekennzeichnet, dass** die beiden Ritzel (17, 17') der Innenzahnradpumpen (11, 12) in einem von zwei Zahnringen (19, 19') eines gemeinsamen Hohlrades (20) kämmen, das als Trennwand zwischen den Pumpenräumen der beiden Innenzahnradpumpen (11, 12) ausgebildet und angeordnet ist.

2. Pumpenbaugruppe nach Anspruch 1, **dadurch gekennzeichnet, dass** das Hohlrad (20) an einer zylindrischen Außenumfangsfläche über ein Gleitlager (25) im Gehäuse (13) gelagert ist.

3. Pumpenbaugruppe nach Anspruch 1 oder 2, **dadurch gekennzeichnet, dass** die beiden Zahnringe (19, 19') des Hohlrades (20) die gleiche Zähnezahl aufweisen und dass auch die in den Zahnringen (19, 19') kämmenden Ritzel (17, 17') mit gleicher Zähnezahl versehen sind.

4. Pumpenbaugruppe nach einem oder mehreren der vorangegangenen Ansprüche, **dadurch gekennzeichnet, dass** die beiden Ritzel (17, 17') unter im wesentlichen diametrischer Anordnung in den zugeordneten Zahnring (19, 19') des gemeinsamen Hohlrades (20) eingreifen.

5. Pumpenbaugruppe nach einem oder mehreren der vorangegangenen Ansprüche, **dadurch gekennzeichnet, dass** nur ein Ritzel (17, 17') der Pumpenbaugruppe (10) drehfest mit der Antriebswelle (14) verbunden ist.

6. Pumpenbaugruppe nach Anspruch 5, **dadurch gekennzeichnet, dass** die Antriebswelle (14) über eine Mitnehmerverbindung drehfest mit einem der beiden Ritzel (17, 17') verbunden ist.

7. Pumpenbaugruppe nach einem oder mehreren der vorangegangenen Ansprüche, **dadurch gekennzeichnet, dass** die Pumpenbaugruppe (10) nur einen Wellendurchgang umfasst, der mittels eines Wellendichtrings (16) abgedichtet ist.

8. Pumpenbaugruppe nach Anspruch 7, **dadurch gekennzeichnet, dass** ein über Verzahnungseingriff mit der Antriebswelle (14) drehgekoppeltes Ritzel (17') mittels eines Lagerzapfens (21) drehbeweglich im Pumpenraum der Innenzahnradpumpe (12) gelagert ist.

9. Pumpenbaugruppe nach Anspruch 8, **dadurch gekennzeichnet, dass** das Ritzel (17') auf einem aus dem Gehäuse (13) herausstehenden Achsstummel des Lagerzapfens (21) gleitend gelagert ist.

10. Pumpenbaugruppe nach einem oder mehreren der vorangegangenen Ansprüche, **dadurch gekennzeichnet, dass** in den beiden Pumpenräumen zwischen Ritzel (17, 17') und Zahnring (19, 19') zur Kompensation von radialen Dichtspaltänderungen jeweils eine Ausgleichsniere (26, 26') angeordnet ist.

## Claims

1. Pump assembly for the synchronous pressurization of two fluid columns, which comprises two internal-gear pumps arranged together in a housing and driven via a common drive shaft, the pinions of which pumps are situated in the associated pump chamber and are in meshing engagement with the ring gear of said pumps, **characterized in that** the two pinions (17, 17') of the internal-gear pumps (11, 12) mesh in one of two toothed rings (19, 19') of a common ring gear (20) which is formed and arranged as a partition between the pump chambers of the two internal-gear pumps (11, 12).

2. Pump assembly according to Claim 1, **characterized in that** the ring gear (20) is mounted at a cylindrical outer circumferential surface via a plain bearing (25) in the housing (13).

3. Pump assembly according to Claim 1 or 2, **characterized in that** the two toothed rings (19, 19') of the ring gear (20) have the same number of teeth, and **in that** also the pinions (17, 17') meshing in the toothed rings (19, 19') are provided with the same number of teeth.

4. Pump assembly according to one or more of the preceding claims, **characterized in that** the two pinions (17, 17') engage, with a substantially diametrical arrangement, into the assigned toothed ring (19, 19') of the common ring gear (20).

5. Pump assembly according to one or more of the preceding claims, **characterized in that** only one pinion (17, 17') of the pump assembly (10) is connected rotationally fixedly to the drive shaft (14).

6. Pump assembly according to Claim 5, **characterized in that** the drive shaft (14) is connected rotationally fixedly to the one of the two pinions (17, 17') via a driver connection.

7. Pump assembly according to one or more of the preceding claims, **characterized in that** the pump assembly (10) includes only one shaft passage which is sealed off by means of a shaft sealing ring (16).

8. Pump assembly according to Claim 7, **characterized in that** a pinion (17') coupled rotationally to the drive shaft (14) via meshing engagement is mounted rotationally movably in the pump chamber of the internal-gear pump (12) by means of a bearing journal (21).

9. Pump assembly according to Claim 8, **characterized in that** the pinion (17') is mounted slidingly on an axle stub, projecting from the housing (13), of the bearing journal (21).

10. Pump assembly according to one or more of the preceding claims, **characterized in that**, in the two pump chambers, a compensation kidney (26, 26') is arranged in each case between the pinion (17, 17') and the toothed ring (19, 19') for the purpose of compensating for radial sealing-gap changes.

## Revendications

1. Module de pompe permettant l'application de pression synchrone à deux colonnes de fluide, lequel comprend deux pompes à engrenages à denture intérieure disposées ensemble dans un boîtier, entraînées par le biais d'un arbre d'entraînement commun, dont les pignons sont situés dans l'espace de pompe associé et sont en engagement d'engrènement avec leurs couronnes dentées, **caractérisé en ce que** les deux pignons (17, 17') des pompes à engrenages à denture intérieure (11, 12) s'engrènent dans l'une de deux bagues dentées (19, 19') d'une couronne dentée commune (20) qui est réalisée et disposée en tant que paroi de séparation entre les espaces de pompe des deux pompes à engrenages à denture intérieure (11, 12).

2. Module de pompe selon la revendication 1, **caractérisé en ce que** la couronne dentée (20) est supportée dans le boîtier (13) sur une surface périphérique extérieure cylindrique par le biais d'un palier lisse (25).

3. Module de pompe selon la revendication 1 ou 2, **caractérisé en ce que** les deux bagues dentées (19, 19') de la couronne dentée (20) présentent le même nombre de dents et **en ce que** les pignons (17, 17') s'engrenant dans les bagues dentées (19, 19') sont également pourvus du même nombre de dents.

4. Module de pompe selon l'une quelconque ou plusieurs des revendications précédentes, **caractérisé en ce que** les deux pignons (17, 17') s'engagent par disposition essentiellement diamétrale dans la bague dentée associée (19, 19') de la couronne dentée commune (20).

5. Module de pompe selon l'une quelconque ou plusieurs des revendications précédentes, **caractérisé en ce que** seulement un pignon (17, 17') du module de pompe (10) est relié de manière solidaire en rotation à l'arbre d'entraînement (14).

6. Module de pompe selon la revendication 5, **caractérisé en ce que** l'arbre d'entraînement (14) est relié de manière solidaire en rotation à l'un des deux pignons (17, 17') par le biais d'une liaison par entraînement.

7. Module de pompe selon l'une quelconque ou plusieurs des revendications précédentes, **caractérisé en ce que** le module de pompe (10) comprend seulement un passage d'arbre qui est étanchéifié au moyen d'un joint d'arbre annulaire (16).

8. Module de pompe selon la revendication 7, **caractérisé en ce qu'**un pignon (17') accouplé en rotation à l'arbre d'entraînement (14) par le biais d'un engagement denté est supporté au moyen d'un tourillon (21) de manière mobile en rotation dans l'espace de pompe de la pompe à engrenages à denture intérieure (12).

9. Module de pompe selon la revendication 8, **caractérisé en ce que** le pignon (17') est supporté de manière coulissante sur un tronçon d'axe du tourillon (21) faisant saillie hors du boîtier (13).

10. Module de pompe selon l'une quelconque ou plusieurs des revendications précédentes, **caractérisé en ce qu'**un élément d'équilibrage en forme de haricot (26, 26') est à chaque fois disposé dans les deux espaces de pompe entre les pignons (17, 17') et la bague dentée (19, 19') pour compenser les variations radiales des interstices d'étanchéité.
